# EUROPÄISCHE PATENTSCHRIFT

(11) **EP 0 342 647 B1**
(45) Veröffentlichungstag und Bekanntmachung des Hinweises auf die Patenterteilung: **11.10.1995**
(21) Anmeldenummer: 89108871.8
(22) Anmeldetag: 17.05.1989
(51) Int. Cl.: G07D 7/00, G01N 21/86, B65H 7/12

(54) **Verfahren zum Prüfen von Blattmaterial**
Method for examining sheet-like objects
Méthode pour l'examen de matériau en feuilles

(30) Priorität: 18.05.1988 DE 3816943
(43) Veröffentlichungstag der Anmeldung: 23.11.1989
(73) Patentinhaber: Siemens Nixdorf Informationssysteme Aktiengesellschaft, 33102 Paderborn (DE)
(72) Erfinder: Schmidt, Ralf, D-4830 Gütersloh (DE)
(74) Vertreter: Fuchs, Franz-Josef, Dr.-Ing.

(56) Entgegenhaltungen:
- EP-A- 0 103 153
- EP-A- 0 149 699
- FR-A- 2 492 349
- GB-A- 2 195 019
- US-A- 4 154 437
- US-A- 4 737 627

## Beschreibung

Die Erfindung betrifft ein Verfahren zum Prüfen von Blattmaterial auf Mehrfachtransport durch Abtasten des Blattmaterials mit Strahlung längs einer vorgegebenen Abtaststrecke.

Ein aus der DE-PS 30 40 963 bekanntes Verfahren dient zum Überprüfen von Dokumenten, beispielsweise von Banknoten, auf Echtheit. Hierzu wird das Dokument bei der Abtastung bestrahlt und aus der an seiner Oberfläche reflektierten Strahlung eine Folge von Abtastsignalen gewonnen, deren Amplitude sich im Zuge der Abtastung von Bereichen unterschiedlicher Reflexionsfähigkeit ändert. Für jede zu prüfende Dokumentenart ist ein vorgegebener Amplitudenverlauf als eine Folge von Sollwerten gespeichert, und durch einen Vergleich der jeweiligen Folge von Abtastsignalen mit der zugehörigen gespeicherten Folge von Sollwerten kann eine Aussage darüber gewonnen werden, ob das geprüfte Dokument echt ist oder nicht.

Das vorbekannte Verfahren kann z.B. bei der Eingabe von Banknoten in einen Geldempfangsautomaten eingesetzt werden. Ein solches Prüfen auf Echtheit ist aber für eine umfassende Auswertung unzureichend, denn dabei müssen die Banknoten auch fehlerfrei gezählt werden. Durch Anwendung des Reflexionsprinzips bei der Erzeugung der Abtastsignale ist jedoch nur eine Prüfung von Oberflächeneigenschaften, nicht aber auch eine Prüfung des ordnungsgemäßen Transports jeweils nur einer einzigen Banknote möglich. Mehrfachtransporte von Banknoten, sogenannte Doppelabzüge, wurden deshalb bisher mit mechanischen Vorrichtungen festgestellt, die meist als Rollenabtaster ausgebildet sind und eine Dickenmessung des transportierten Blattmaterials vornehmen. Eine solche Dickenmessung ist aber insbesondere durch Verschmutzungen störanfällig und bedarf zur ordnungsgemäßen Funktion einer sorgfältigen Justierung und Wartung. Eine berührungslose Feststellung des Mehrfachtransports von Blattmaterial, insbesondere von Banknoten, ist nach den bisher bekannten Prüfverfahren nicht möglich, könnte aber die in Aufbau und Wartung aufwendigen mechanischen Vorrichtungen vorteilhaft ersetzen.

Aus der US-A-4,737,627 ist ein Verfahren zum Prüfen von Blattmaterial auf Mehrfachtransport bekannt, das die Strahlungsdurchlässigkeit des Blattmaterials auswertet. Eine Strahlquelle wird so gesteuert, daß die durch das Blattmaterial hindurchtretende Strahlung einem Wert entspricht, der nach Wandlung durch einen Strahlungsdetektor in eine Spannung annähernd einer vorgegebenen Spannung Vₖ entspricht. Die Strahlungsquelle wird durch die Binärwerte angesteuert. Diese Binärwerte werden über mehrere Messungen aufsummiert und mit einem gespeicherten, an einer Referenzeinrichtung gewonnenen Schwellwert verglichen. Abhängig von dem Vergleich wird ein Erkennungssignal für einen Mehrfachtransport des Blattmaterials abgegeben. Um vernünftige Vergleichsergebnisse zu erhalten, muß die Summenbildung über eine vorbestimmte Zahl von Meßwerten erfolgen.

Aus der US-A-4,154,437 ist ferner eine Detektoreinrichtung zum Erkennen des Mehrfachabzugs von Banknoten bekannt. Die Banknoten werden innerhalb einer Abtasteinrichtung mit Strahlung längs einer vorgegebenen Abtaststrecke abgetastet, wobei abhängig von der Strahlungsdurchlässigkeit der Banknoten eine Folge von Abtastsignalen erzeugt wird. Aus den Abtastsignalen wird ein Mittelwert gebildet, der mit einem Mittelwert für Musterbanknoten verglichen wird. Abhängig von diesem Vergleich wird ein Erkennungssignal für Mehrfachtransport erzeugt. Es ist wahrscheinlich, daß der Mittelwert für die Musterbanknoten auf die gleiche Weise ermittelt wird wie bei den zu prüfenden Banknoten.

Es ist Aufgabe der Erfindung, ein Verfahren zur berührungslosen Feststellung des Mehrfachtransports von Blattmaterial anzugeben, das mit hoher Genauigkeit arbeitet.

Diese Aufgabe wird durch die Merkmale des Anspruchs 1 gelöst. Vorteilhafte Weiterbildungen der Erfindung sind in den abhängigen Ansprüchen angegeben.

Die Erfindung beruht auf der Erkenntnis, daß die Strahlungsdurchlässigkeit eines Materials mit dessen Dicke exponentiell abnimmt. Hat z.B. Blattmaterial einer vorgegebenen Dicke einen bestimmten, die Strahlungsintensität herabsetzenden Dämpfungswert, so wird bei der Verdoppelung der Dicke durch ein weiteres Blatt eine Gesamtdämpfung wirksam, die proportional dem Produkt der Einzeldämpfungen ist. Auf diese Weise ergeben sich bereits bei einer Verdoppelung der Blattmaterialdicke, also beispielsweise bei einem Doppeltransport von Blattmaterial, entsprechend hohe Intensitätsunterschiede der erzeugten Abtastsignale gegenüber dem Normalfall, die eine sehr zuverlässige Untersuchung zwischen Einfach- und Doppeltransport von Blattmaterial gewährleisten.

Ein weiterer Vorteil der Erzeugung der Abtastsignale mit Strahlung, die das Blattmaterial durchsetzt, besteht darin, daß dieses Prinzip sehr unempfindlich gegenüber einem wechselnden Reflexionsgrad der Blattmaterialoberfläche ist, der beispielsweise durch einen Aufdruck oder durch Verschmutzungen bedingt ist. Derartige Veränderungen der Blattmaterialoberfläche haben in den meisten Fällen eine so geringe Schichtdicke, daß die Strahlungsdurchlässigkeit des Blattmaterials selbst vergleichsweise geringfügig beeinflußt wird.

Um aber auch bei stärkeren Verschmutzungen und/oder größeren, z.B. durch Bedrucken bedingten Helligkeitsunterschieden eine zuverlässige Feststellung eines Mehrfachtransports zu gewährleisten, ist bei dem erfindungsgemäßen Verfahren ferner eine gleichartige Mittelwertbildung der Abtastsignale und der Sollwerte vorgesehen. Dadurch wird erreicht, daß die Vergleichsergebnisse statistisch sicherer sind.

Vorteilhaft wird die Intensität der zur Abtastung verwendeten Strahlung für eine bestimmte Art von Blattmaterial entsprechend einem vorgegebenen Wertebereich des Mittelwerts der Sollwerte eingestellt. Dadurch wird erreicht, daß die zu vergleichenden Signale dem Empfindlichkeitsbereich der Auswerteeinrichtungen bei wechselnden Arten des Blattmaterials stets optimal angepaßt sind.

Das Verfahren nach der Erfindung führt auch dann zu einer zuverlässigen Aussage über Einzel- oder Mehrfachtransporte von Blattmaterial, wenn die transportierten Blätter nicht genau übereinander liegen, sondern relativ zueinander verschoben sind. Um dabei auch große Verschiebungsbeträge als Mehrfachtransport erkennen zu können, kann das Verfahren derart weiter ausgebildet sein, daß der bei der Abtastung vom Blattmaterial zurückgelegte Weg festgestellt wird und mit einem vorgegebenen Sollweg zwecks Erzeugens eines weiteren Erkennungssignals verglichen wird. Dadurch wird erreicht, daß Blattmaterialansammlungen mit einer Länge, die über die vorgegebene Formatlänge hinausgeht, zusätzlich erkannt werden, so daß dadurch ein weiteres Kriterium zur Erkennung des Mehrfachtransports verfügbar ist.

Allgemein bietet ein Verfahren nach der Erfindung den Vorteil, daß es auch in Kombination mit einem Reflexionsverfahren eingesetzt werden kann, wodurch es dann möglich ist, innerhalb ein und derselben Auswerteeinrichtung die Echtheit und den Transport von Einzelblättern zu überwachen.

Die Erfindung wird im folgenden unter Bezugnahme auf die Zeichnung für ein Ausführungsbeispiel näher erläutert. Dabei zeigen:
- Fig. 1: eine prinzipielle Darstellung des Verfahrens an Hand der Wechselwirkung dabei verwendeter Funktionseinheiten,
- Fig. 2: ein Flußdiagramm eines bei dem Verfahren angewendeten Einmeßvorgangs zum Ermitteln von Sollwerten,
- Fig. 3: eine Steuerfunktion zum Feststellen des Stromes, mit dem die Strahlungsquelle zu versorgen ist, und
- Fig. 4: ein Flußdiagramm eines Ausführungsbeispiels der Erfindung.

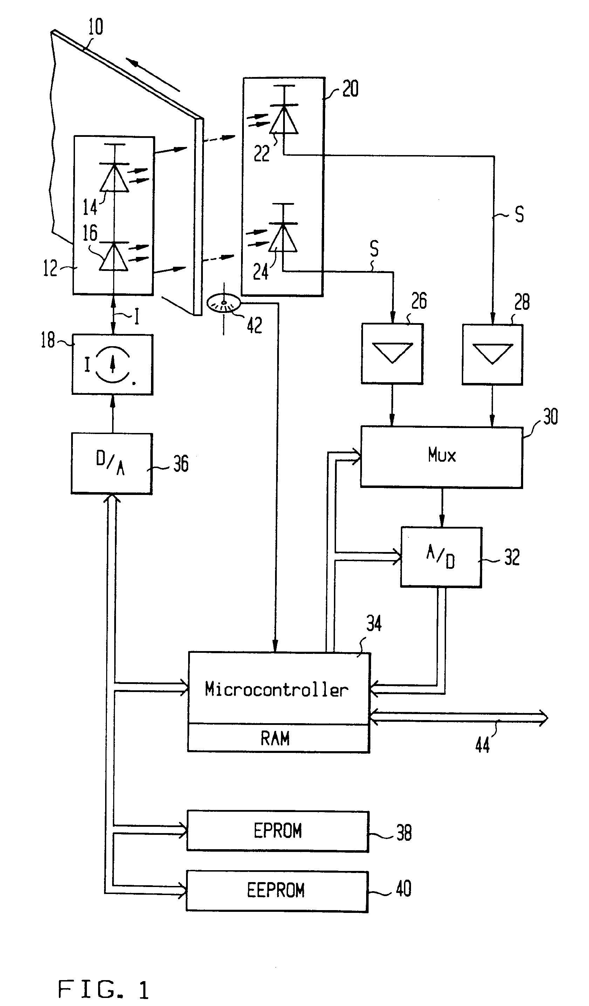

In Fig. 1 ist in Blockdarstellung eine Prüfeinrichtung zum Erkennen des Mehrfachtransports von Banknoten in einem Geldautomaten gezeigt. Eine auf Mehrfachtransport zu prüfende Banknote 10 wird zwischen einer steuerbaren Strahlungsquelle 12 und einem Strahlungsempfängermodul 20 hindurchgeführt. Die steuerbare Strahlungsquelle 12 besteht aus zwei Lumineszenzdioden 14, 16, die, abhängig vom verwendeten Typ, Strahlung im sichtbaren Bereich bzw. im Infrarot-Bereich aussenden. Die Lumineszenzdioden 14, 16 sind in Serie geschaltet und werden von einem Strom I durchflossen, der von einer steuerbaren Stromquelle 18 erzeugt wird.

Die Strahlung der Lumineszenzdioden 14, 16 durchdringt in zwei Bereichen die Banknote 10 und wird von dieser teilweise absorbiert. Die durch die Banknote 10 hindurchtretende, abgeschwächte Strahlung trifft auf zwei Fotoempfänger 22, 24, beispielsweise Fotodioden, des Strahlungsempfängermoduls 20 und wird von diesen in elektrische Signale S umgewandelt. Diese werden von Verstärkern 26, 28 verstärkt und einem Analogmultiplexer 30 zugeführt. Die Signale S der Fotoempfänger 22, 24 werden in dem Analogmultiplexer 30 abwechselnd auf seinen Ausgang durchgeschaltet und einem Analog-Digitalwandler 32 zugeführt, dessen Digitalausgang mit dem Eingang eines Microcontrollers 34 verbunden ist. Dieser steuert den Analogmultiplexer 30 und startet den Wandlungszyklus des Analog-Digitalwandlers 32. Der Microcontroller 34 hat Zugriff auf einen Speicher RAM zum Abspeichern aktueller Daten (Signale S) und ist über einen Datenbus mit einem EPROM 38 (Erasable Programmable Read Only Memory), das als Programmspeicher für den Microcontroller 34 dient, sowie mit einem EEPROM 40 (Electrically Erasable Programmable Read Only Memory), das zum Speichern von banknotenspezifischen Daten verwendet wird, verbunden. Der Microcontroller 34 steuert den Ablauf des gesamten Verfahrens, berechnet Mittelwerte und vergleicht sie, wie noch beschrieben wird. Der Microcontroller 34 steuert einen Digital-Analogwandler 36, dessen Ausgangssignal zum Einstellen des Stromes I der steuerbaren Stromquelle 18 dient. Weiterhin ist der Microcontroller 34 über eine Datenleitung 44 mit einem nicht in der Fig. 1 dargestellten übergeordneten Rechner verbunden, dem das Ergebnis der Prüfung mitgeteilt wird, und der Daten zur Ablaufsteuerung an den Microcontroller 34 sendet.

Die auf Mehrfachtransport zu prüfende Banknote 10 wird über eine nicht dargestellte Transportvorrichtung durch die aus der steuerbaren Strahlungsquelle 12 und dem Strahlungsempfängermodul 20 gebildete Durchlichtmeßstrecke geführt. Der von der Banknote 10 zurückgelegte Weg wird dabei von einem Weggeber 42 erfaßt und durch Taktsignale dem Microcontroller 34 mitgeteilt. Die steuerbare Strahlungsquelle 12 und der Strahlungsempfängermodul 20 sind so justierbar, daß der jeweils abzutastende Bereich der Banknote 10 als Abtaststrecke ausgewählt werden kann. Werden die steuerbare Strahlungsquelle 12 und der Strahlungsempfängermodul 20 z.B. so justiert, daß die Abtaststrecken entlang der Ränder der Banknote 10 verlaufen, so kann an Hand der Signale S auch eine Prüfung des Blattformates oder der richtigen Lage der Banknote 10 durchgeführt werden. Befindet sich nämlich zwischen der steuerbaren Strahlungsquelle 12 sowie dem Strahlungsempfängermodul 20 kein Blattmaterial, so empfangen die Fotoempfänger 22, 24 die nicht abgeschwächte Strahlung der Lumineszenzdioden 14, 16, was zu einem signifikant hohen Pegel der Signale S führt. Bei Auftreten dieses Signalpegels kann das Fehlen oder aber eine Fehlausrichtung einer Banknote die Ursache sein.

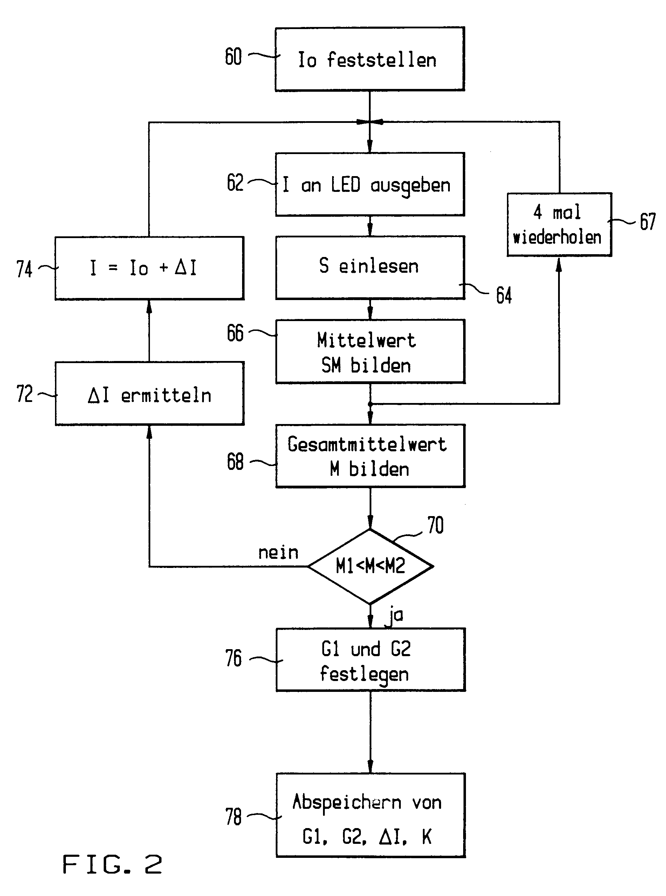

Durch Einmessen mit Musterbanknoten kann der Geldscheinautomat auf eine vom Anwender gewünschte Banknotenart eingestellt werden. Der Einmeßvorgang ist als Flußdiagramm in Fig. 2 gezeigt. In einem ersten Verfahrensschritt 60 wird ein definierter Ausgangszustand der aus der steuerbaren Strahlungsquelle 12 und dem Strahlungsempfängermodul 20 bestehenden Durchlichtmeßstrecke erzeugt. Hierzu wird die Durchlichtmeßstrecke ohne Zuführung einer Banknote betrieben, so daß die Strahlung der steuerbaren Strahlungsquelle 12 direkt und ungeschwächt auf den Strahlungsempfängermodul 20 auftreffen kann. Die steuerbare Strahlungsquelle 12 wird über die steuerbare Stromquelle 18 auf einen Grundstromwert Io so eingestellt (Verfahrensschritt 60), daß der Pegel der Signale S der Fotoempfänger 22, 24 im oberen Abschnitt eines vorgegebenen Arbeitsbereichs des Analog-Digitalwandlers 32 liegt, beispielsweise bei 90 %.

Im nächsten Verfahrensschritt 64 wird eine Musterbanknote über die Transportvorrichtung in die Durchlichtmeßstrecke transportiert und längs der durch die Lage der Lumineszenzdioden (LEDs) 14, 16 und der zugehörigen Fotoempfänger 22, 24 bestimmten Abtaststrecke abgetastet. Die Signale S der Fotoempfänger 22, 24 werden im Zeitmultiplex-Verfahren in den Speicher RAM des Microcontrollers 34 eingelesen und, entweder während des Einlesens oder nachdem die Banknote 10 die Abtaststrecke durchlaufen hat, der arithmetische Mittelwert SM der Signale S gebildet (Verfahrensschritt 66). Um eine höhere statistische Sicherheit des Ergebnisses beim Einmessen zu erhalten, wird der Prüfvorgang entsprechend der in Fig. 2 gezeigten Verzweigung 67 mit vier Banknoten, die sich hinsichtlich ihres Gebrauchszustandes unterscheiden, durchgeführt. Aus den so erhaltenen Mittelwerten SM wird beim Verfahrensschritt 68 ein arithmetischer Gesamtmittelwert M berechnet, der auch als Sollwert M bezeichnet wird. Dieser Sollwert M wird im nächsten Verfahrensschritt 70 dahingehend geprüft, ob er in einem vorgegebenen Bereich, gebildet durch einen unteren Wert M1 und einen oberen Wert M2, liegt. Die Werte M1, M2 sind im Microcontroller 34 als Digitalwerte fest eingespeichert und betragen bei Verwendung eines 8-Bit-Microcontrollers z.B. M1 = 100, M2 = 140. Liegt der Sollwert M außerhalb dieses Bereiches, so wird in der in Fig. 2 gezeigten Verzweigung 72, 74 nach einer empirisch ermittelten Steuerfunktion, die später noch erläutert wird, ein Differenzstromwert ΔI ermittelt, um den der Grundstromwert Io geändert werden muß, damit der Sollwert M beim nächsten Einmeßvorgang mit einer hohen Wahrscheinlichkeit innerhalb des durch die Werte M1, M2 definierten Bereichs liegt.

Der Strom I, mit dem die steuerbare Strahlungsquelle 12 nach Durchlaufen der Verfahrensschritte 72, 74 beaufschlagt wird, ergibt sich aus der Summe des Grundstromwertes Io und des Differenzstromwertes ΔI. Der Einmeßvorgang wird unter Zuführung der Banknoten nach den beschriebenen Verfahrensschritten wiederholt, und der Sollwert M mit den Werten M1, M2 verglichen. Sollte der Sollwert M wiederum außerhalb des durch die Werte M1, M2 definierten Bereichs liegen, so wird aus der Steuerfunktion der zugehörige Differenzstromwert ΔI berechnet und zum vorher ermittelten Strom I addiert. Dieser Vorgang wird so lange wiederholt, bis der Sollwert M innerhalb der vorgegebenen Grenzen M1, M2 liegt.

Der so ermittelte Sollwert M und die zugehörige Summe der Differenzstromwerte ΔI kennzeichnen die Musterbanknoten einer Art. Mit Hilfe des Sollwertes M wird im Verfahrensschritt 76 ein Toleranzbereich mit einem unteren Grenzwert G1 und einem oberen Grenzwert G2 definiert, innerhalb dem der Mittelwert SM einer zu prüfenden Banknote liegen muß, um als zu dieser Art von Banknoten gehörend und als Einzelbanknote erkannt zu werden. In der Praxis hat sich als unterer Grenzwert G1 das 0,8-Fache und als oberer Grenzwert G2 das 1,2-Fache des Sollwertes M bewährt. Die zu einer bestimmten Art von Banknoten gehörenden Daten, beispielsweise der obere Grenzwert G2, der untere Grenzwert G1, die Summe der Differenzstromwerte ΔI und eine Kennzeichnung K der Banknoten, werden im Verfahrensschritt 78 im EEPROM 40 abgespeichert und bei der Prüfung der Banknoten abgerufen.

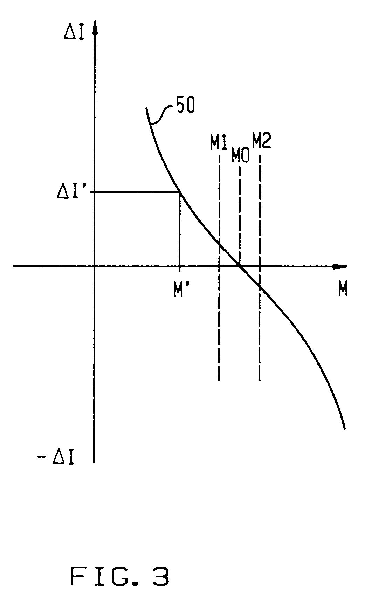

In Fig. 3 ist die Steuerfunktion zum Feststellen der Differenzstromwerte ΔI in Abhängigkeit vom Sollwert M dargestellt. Wie bereits erläutert, soll der Sollwert M in möglichst wenigen iterativen Schritten innerhalb eines durch die Werte M1, M2 fest vorgegebenen Bereichs einpendeln. Dieser Bereich hat auch einen mittleren Wert M0. Beispielhaft ist in der Fig. 3 dargestellt, daß beim ersten Einmeßvorgang ein Sollwert M′ festgestellt wird, der deutlich außerhalb des durch die Werte M1, M2 definierten Bereiches liegt. Der Kurve 50 der Steuerfunktion kann ein dem Sollwert M′ zugehöriger Differenzstromwert ΔI′ entnommen werden, der bei Addition zum Grundstromwert Io und entsprechender Ansteuerung der Strahlungsquelle 12 dazu führt, daß der im nächsten Einmeßvorgang gemessene Sollwert M mit hoher Wahrscheinlichkeit innerhalb des durch die Werte M1, M2 definierten Bereiches liegt. Die Kurve 50 der Steuerfunktion ist dabei so zu wählen, daß der Sollwert M möglichst schon beim zweiten Einmeßvorgang innerhalb des durch die Werte M1, M2 definierten Bereiches liegt. Es hat sich in der Praxis gezeigt, daß der Verlauf der Kurve 50 der Steuerfunktion dann optimal ist, wenn er bei zunehmenden Abweichungen des Sollwerts M von einem mittleren Wert M0 progressiv ansteigt bzw. abfällt.

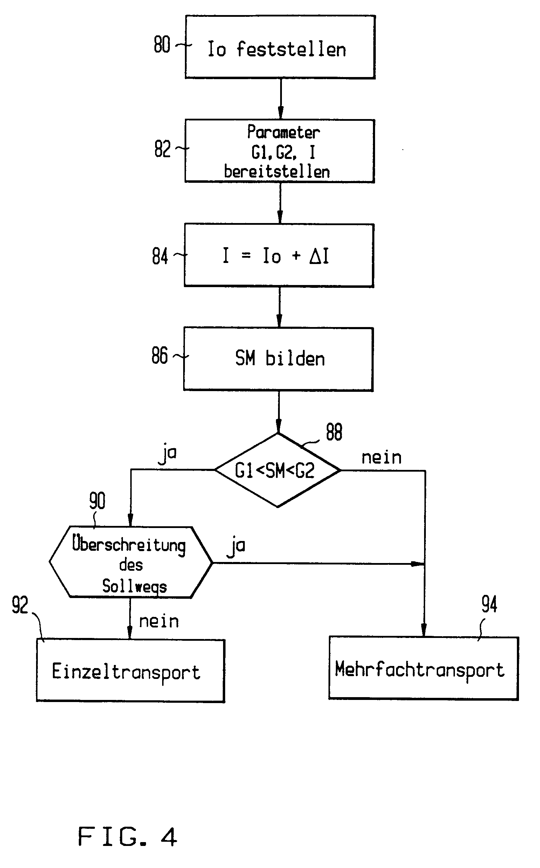

In Fig. 4 ist der Ablauf eines Prüfvorgangs zum Feststellen eines Mehrfachtransports von Banknoten an Hand eines Flußdiagramms dargestellt. Bevor eine zu prüfende Banknote in die Durchlichtmeßstrecke transportiert wird, wird der Grundstromwert Io in bereits beschriebener Weise ermittelt (Verfahrensschritt 80). Zur Durchführung der Prüfung greift der Microcontroller 34 im nächsten Verfahrensschritt 82 auf die banknotenspezifischen Parameter, bestehend aus dem oberen Grenzwert G2, dem unteren Grenzwert G1 sowie dem Differenzstromwert ΔI, zu, die in dem EEPROM 40 gespeichert sind. Der Microcontroller 34 veranlaßt über den Digital-Analogwandler 36 und die steuerbare Stromquelle 18, daß der steuerbaren Strahlungsquelle 12 der Strom I = Io + ΔI zugeführt wird (Verfahrensschritt 84). Die über eine Transporteinrichtung der Durchlichtmeßstrecke zugeführte Banknote 10 wird längs der definierten Abtaststrecken abgetastet und über die Fotoempfänger 22, 24 eine Folge von Abtastsignalen S erzeugt. Die Digitalwerte der Abtastsignale S werden in den Speicher RAM des Microcontrollers 34 eingelesen und im nachfolgenden Verfahrensschritt 86 der arithmetische Mittelwert SM berechnet. Der Mittelwert SM wird anschließend mit den gespeicherten Grenzwerten G1, G2 verglichen (Verfahrensschritt 88). Liegt der Mittelwert SM innerhalb des durch die Grenzwerte G1, G2 definierten Toleranzbereiches, so wird in einem nachfolgenden Prüfvorgang 90 der von der Banknote 10 zurückgelegte Weg mit einem Sollweg verglichen. Der zurückgelegte Weg wird dabei durch Zählen der Taktsignale des Weggebers 42 ermittelt, die gezählt werden, solange die Fotoempfänger 22, 24 eine abgeschwächte Strahlung empfangen. Durch diese Art der Wegmessung kann zusätzlich das lagerichtige Zuführen der Banknoten über die Transporteinrichtung bzw. ein Überlappen von Banknoten festgestellt werden. Wird beim Vergleich des Mittelwertes SM mit den Grenzwerten G1, G2 eine Grenzwertüberschreitung festgestellt oder wird der Sollweg überschritten, so wird vom Microcontroller 34 ein Erkennungssignal gebildet, das den Mehrfachtransport bzw. eine fehlerhafte Banknotenzuführung signalisiert (Verfahrensschritt 94). Dieses Signal wird an den übergeordneten Rechner weitergegeben, der eine Ausgabe bzw. Fehlauswertung der Banknoten am Geldautomaten unterdrückt. Im Falle eines positiven Prüfergebnisses wird zum Verfahrensschritt 92 verzweigt und dem Rechner ein einen Einzeltransport der Banknote 10 kennzeichnendes Signal übermittelt.

Da vor jeder Geldscheinausgabe oder in bestimmten Zeitabständen der Grundstromwert Io jeweils erneut ermittelt wird, wirkt sich eine Änderung des Übertragungsverhaltens der Durchlichtmeßstrecke nicht aus. Solche Veränderungen können beispielsweise durch Alterung der Lumineszenzdioden 14, 16 oder durch Verschmutzen der Durchlichtmeßstrecke hervorgerufen werden. Da sowohl vor der Einmessung als auch beim Prüfvorgang jeweils ein definierter Anfangszustand eingestellt wird, ist dieses Verfahren zum Prüfen von Banknoten praktisch wartungsfrei.

## Patentansprüche

1. Verfahren zum Prüfen von Blattmaterial auf Mehrfachtransport, umfassend die folgenden Schritte:
a) in einem Einmeßvorvorgang werden nacheinander mehrere Muster einer Art (10) mit Strahlung einer mit Strom betriebenen Strahlungsquelle (12) längs mindestens einer vorgegebenen Abtaststrecke bestrahlt (62),
b) abhängig von der Strahlungsdurchlässigkeit des jeweiligen Musters wird eine Folge von Abtastsignalen (S) längs der Abtastmeßstrecke erzeugt (20, 64),
c) aus den Abtastsignalen (S) wird ein Mittelwert (SM) gebildet (66),
d) aus den Mittelwerten (SM) für die einzelnen Muster dieser Art wird ein arithmetischer Gesamtmittelwert oder Sollwert (M) erzeugt (68),
e) durch wiederholtes Eingeben dieser Muster wird der Strom (I) für die Strahlungsquelle so lange verändert, bis der Gesamtmittelwert oder Sollwert (M) innerhalb eines vorgegebenen Wertebereichs (M1, M2) liegt (70),
f) dieser Strom (I) setzt sich aus einem Grundstrom (Io) und einem Differenzstrom (ΔI) zusammen, welcher nach einer vorgegebenen Steuerfunktion ΔI = f(M) ermittelt wird, worin M der Gesamtmittelwert oder Sollwert ist,
g) in einem später erfolgenden Prüfvorgang wird anstelle der Muster ein zu prüfendes Blattmaterial dieser Art (10) mit Strahlung der mit dem vorgenannten Strom (I) gespeisten Strahlungsquelle längs der vorgebenen Abtaststrecke bestrahlt (84),
h) abhängig von der Strahlungsdurchlässigkeit des zu prüfenden Blattmaterials (10) wird eine Folge von Prüf-Abtastsignalen erzeugt, i) aus den Prüf-Abtastsignalen wird ein dem Mittelwert (SM) gleichartiger Mittelwert der Prüf-Abtastsignale gebildet (86),
j) abhängig vom Vergleich des Mittelwertes (SM) der Prüf-Abtastsignale mit Toleranzgrenzen (61, 62) des Gesamtmittelwertes oder Sollwertes (M) für Muster dieser Art wird ein Erkennungssignal erzeugt.

2. Verfahren nach Anspruch 1, dadurch **gekennzeichnet**, daß als Grundstrom (Io) ein Strom ermittelt wird, bei dem die Intensität der Strahlung bei fehlendem Blattmaterial (10) einen vorgegebenen Wert der Soll-Abtastsignale (S) erreicht.

3. Verfahren nach Anspruch 1 oder 2, dadurch **gekennzeichnet**, daß die Kurve (50) der Steuerfunktion ΔI = f(M) für zunehmende Absolutbeträge der Differenz aus dem Mittelwert (M) der Sollwerte und einem mittleren Wert (MO) exponentiell ansteigt bzw. abfällt (vgl. Figur 3).

4. Verfahren nach Anspruch 1, dadurch **gekennzeichnet**, daß ein Erkennungssignal für Mehrfachtransport erzeugt wird, wenn der Mittelwert (SM) der Prüf-Abtastsignale außerhalb eines oberen Grenzwertes (G2) oder eines unteren Grenzwertes (G1) liegt.

5. Verfahren nach Anspruch 4, dadurch **gekennzeichnet**, daß der obere Grenzwert (G2) das 1,2-Fache und der untere Grenswert (G1) das 0,8-Fache des Mittelwertes (M) der Sollwerte beträgt.

6. Verfahren nach einem der vorhergehenden Ansprüche, dadurch **gekennzeichnet**, daß als Mittelwerte (SM, M) arithmetische Mittelwerte verwendet werden.

7. Verfahren nach einem der vorhergehenden Ansprüche, dadurch **gekennzeichnet**, daß die Abtastung längs mehrerer Abtaststrecken vorgenommen wird.

8. Verfahren nach Anspruch 7, dadurch **gekennzeichnet**, daß die Abtastsignale (S) mehrerer Abtaststrecken addiert werden.

9. Verfahren nach einem der vorhergehenden Ansprüche, dadurch **gekennzeichnet**, daß das Blattmaterial (10) zur Abtastung längs der Abtaststrecke bewegt wird.

10. Verfahren nach Anspruch 9, dadurch **gekennzeichnet**, daß der bei der Abtastung vom Blattmaterial (10) zurückgelegte Weg festgestellt wird und mit einem vorgegebenen Sollweg zwecks Erzeugens eines weiteren Erkennungssignals verglichen wird.

## Claims

1. Method of examining sheet material for multiple transport, comprising the following steps:
a) in a preliminary calibrating operation, a number of samples of one type (10) are successively irradiated by radiation of a current-operated radiation source (12) along at least one predetermined scanning section (62),
b) depending on the radiation transparency of the respective sample, a sequence of scanning signals (S) is generated along the scanning/measuring section (20, 64),
c) a mean value (SM) is formed from the scanning signals (S) (66),
d) from the mean values (SM) for the individual samples of this type, an arithmetic overall mean value or set value (M) is produced (68),
e) by repeated entering of these samples, the current (I) for the radiation source is changed until the overall mean value or set value (M) lies within a predetermined value range (M1, M2) (70),
f) this current (I) is made up of a basic current (Io) and a differential current (ΔI), which is determined in accordance with a predetermined control function ΔI = f(M), wherein M is the overall mean value or set value,
g) in a subsequent testing operation, instead of the samples a sheet material of this type (10) to be tested is irradiated by radiation of the radiation source, fed by the abovementioned current (I), along the predetermined scanning section (84),
h) depending on the radiation transparency of the sheet material (10) to be tested, a sequence of testing/scanning signals is generated,
i) from the testing/scanning signals, a mean value of the testing/scanning signals of a kind similar to the mean value (SM) is formed (86),
j) depending on the comparison of the mean value (SM) of the testing/scanning signals with tolerance limits (61, 62) of the overall mean value or set value (M) for samples of this kind, a detection signal is generated.

2. Method according to Claim 1, characterized in that, as the basic current (Io) a current is determined at which the intensity of the radiation without sheet material (10) reaches a predetermined value of the set scanning signals (S).

3. Method according to Claim 1 or 2, characterized in that the curve (50) of the control function ΔI = f(M) rises and falls exponentially for increasing absolute amounts of the difference between the mean value (M) of the set values and a mid-value (MO) (cf. Figure 3).

4. Method according to Claim 1, characterized in that a detection signal for multiple transport is generated whenever the mean value (SM) of the testing/scanning signals lies outside an upper limit value (G2) or a lower limit value (G1),

5. Method according to Claim 4, characterized in that the upper limit value (G2) is 1.2 times and the lower limit value (G1) is 0.8 times the mean value (M) of the set values.

6. Method according to one of the preceding claims, characterized in that arithmetic mean values are used as mean values (SM, M).

7. Method according to one of the preceding claims, characterized in that the scanning is performed along a plurality of scanning sections.

8. Method according to Claim 7, characterized in that the scanning signals (S) of a plurality of scanning sections are added.

9. Method according to one of the preceding claims, characterized in that the sheet material (10) is moved for scanning along the scanning section.

10. Method according to Claim 9, characterized in that the path covered in the scanning of the sheet material (10) is determined and is compared with a predetermined set path for the purpose of generating a further detection signal.

## Revendications

1. Procédé permettant de vérifier si plusieurs feuilles de matériau passent à la fois comprenant les étapes suivantes :
a) on expose (62) pendant une opération préalable d'étalonnage l'un après l'autre, plusieurs exemplaires d'un type (10) le long d'au moins une section prescrite de balayage au rayonnement d'une source (12) de rayonnement commandée par courant électrique,
b) on produit (20,64), en fonction de la transparence au rayonnement de l'exemplaire considéré, une suite de signaux (S) de balayage le long de la section de balayage de mesure,
c) on forme (66) une valeur moyenne (SM) à partir des signaux (S) de balayage,
d) on produit (68) à partir des valeurs moyennes (SM) pour les divers exemplaires de ce type une valeur moyenne arithmétique globale ou valeur de consigne (M),
e) on modifie le courant (I) pour la source de rayonnement en répétant l'introduction de ces exemplaires, jusqu'à ce que la valeur moyenne globale ou valeur de consigne (M) soit (70) dans un domaine (M1,M2) prescrit de valeurs,
f) ce courant (I) se compose d'un courant (Io) de base et d'un courant (ΔI) de différence, que l'on détermine suivant une fonction ΔI = f(M) prescrite de commande, M étant la valeur moyenne globale ou valeur de consigne,
g) on expose (84) pendant une opération de vérification s'effectuant ultérieurement, à la place des exemplaires, un matériau en feuille à contrôler de ce type (10), le long de la section prescrite de balayage à un rayonnement de la source de rayonnement alimentée par le courant (I) précité,
h) on produit en fonction de la transparence au rayonnement du matériau (10) en feuille à contrôler, une suite de signaux de balayage de contrôle,
i) on forme (86), à partir des signaux de balayage de contrôle, une valeur moyenne des signaux de balayage de contrôle , qui est du même genre que la valeur moyenne (SM),
j) on produit un signal d'identification en fonction de la comparaison de la valeur moyenne (SM) des signaux d'échantillonnage de contrôle à des limites (61,62) de tolérance de la valeur moyenne globale ou valeur de consigne (M) pour des exemplaires de ce type.

2. Procédé suivant la revendication 1, caractérisé en ce que l'on détermine comme courant (Io) de base, un courant pour lequel l'intensité du rayonnement atteint, en cas d'absence du matériau (10) en feuille, une valeur prescrite des signaux (S) de balayage de consigne.

3. Procédé suivant la revendication 1 ou 2, caractérisé en ce que la courbe (50) de la fonction de commande ΔI = f(M) croît ou décroît exponentiellement (voir figure 3) lorsque les valeurs absolues de la différence entre la valeur moyenne (M) des valeurs de consigne et une valeur médiane (MO) augmentent.

4. Procédé suivant la revendication 1, caractérisé en ce que l'on produit un signal d'identification du passage de plusieurs feuilles à la fois, lorsque la valeur moyenne (SM) des signaux de balayage de contrôle est plus grande qu'une valeur limite supérieure (G2) ou plus petite qu'une valeur limite inférieure (G1).

5. Procédé suivant la revendication 4, caractérisé en ce que la valeur limite supérieure (G2) est égale à 1,2 fois la valeur moyenne (M) des valeurs de consigne et la valeur limite inférieure (G1) est égale à 0,8 fois la valeur moyenne (M) des valeurs de consigne.

6. Procédé suivant l'une des revendications précédentes, caractérisé en ce que l'on utilise comme valeurs moyennes (SM,M), des valeurs moyennes arithmétiques.

7. Procédé suivant l'une des revendications précédentes, caractérisé en ce que l'on effectue le balayage le long de plusieurs sections de balayage.

8. Procédé suivant la revendication 7, caractérisé en ce que l'on additionne les signaux (S) de balayage de plusieurs sections de balayage.

9. Procédé suivant l'une des revendications précédentes, caractérisé en ce que l'on déplace le matériau (10) en feuille pour le balayage le long de la section de balayage.

10. Procédé suivant la revendication 9, caractérisé en ce que l'on fixe le chemin parcouru lors du balayage du matériau (10) en feuille et on le compare à un chemin prescrit de consigne en vue de produire un autre signal d'identification.
